# EUROPEAN PATENT SPECIFICATION

(11) **EP 1 794 760 B1**
(45) Date of publication and mention of the grant of the patent: **09.01.2013**
(21) Application number: 05857909.5
(22) Date of filing: 11.08.2005
(51) Int. Cl.: G21C 17/00, G21C 17/10, G01N 17/02, G21C 17/022

(54) **Device and method for the determination of the electrochemical corrosion potential**
Verfahren und Methode zur Bestimmung des elektrochemischen Korrosionspotentials
Procédé et dispositif pour mesurer la potential de corrosion électrochimique

(30) Priority: 28.09.2004 US 951531
(43) Date of publication of application: 13.06.2007
(73) Proprietor: Areva NP Inc., Lynchburg, VA 24501 (US); Areva NP GmbH, 91052 Erlangen (DE)
(72) Inventor: POP, Mihai, G.M., Alexandria, VA 22309 (US); LOCKAMON, Brian, G., Evington, VA 24550 (US); SELL, Hans-Jurgen, 91334 Hemhofen (DE); KILIAN, Renate, 90766 Furth (DE)
(74) Representative: Domenego, Bertrand
(86) International application number: PCT/US2005/028842
(87) International publication number: WO 2006/135391

(56) References cited:
- EP-A1- 0 417 571
- EP-A2- 0 174 768
- EP-A2- 0 499 217
- JP-A- 2000 065 785
- US-A- 4 564 422
- US-A- 5 171 517
- US-A- 5 171 517
- US-B1- 6 181 760
- US-B1- 6 181 760
- US-B1- 6 623 611

## Description

### FIELD OF THE INVENTION

The current invention relates to the determination of electrochemical corrosion potential for components in a nuclear power plant. More specifically, the current invention provides a device and method for determination of electrochemical corrosion potential of nuclear reactor fuel in a reactor coolant system for a nuclear power plant, wherein the electrochemical corrosion potential is determined through potential measurements remote from the fuel.

### BACKGROUND INFORMATION

Nuclear reactors, for example boiling water and pressurized water reactors, pass water through a reactor core which contains nuclear fuel. The passing of this water through the reactor core heats the water. The water is heated to either a hot liquid phase (pressurized water) or a combination of a hot liquid phase and a vapor phase (boiling water). The water and/or steam are transported through systems in the nuclear power plant, such as the reactor pressure vessel, steam separators, pressurizers and steam generators to transfer the heat energy generated by the nuclear reaction to other working systems. These piping systems and components transporting the fluid are made of various materials which may be susceptible to corrosion and irradiation induced or assisted stress corrosion cracking.

Electrochemical corrosion potential provides a guide to determining an amount of a oxidation/reduction reaction which occurs in a metal, for example on the surface of primary water coolant pipes. The oxidation/reduction reactions may depend, for example, on a dissolved oxygen concentration of water in a nuclear reactor, hydrogen concentration and/or hydrogen peroxide concentration. To decrease the electrochemical corrosion potential of these reactor coolant systems, the dissolved oxygen, and hydrogen peroxide concentrations of the water are kept as low as possible, preferably, to a level of about 25 parts per billion. This is performed, for example, by adding hydrogen to the system. Practically, however, maintaining dissolved oxygen, hydrogen and hydrogen peroxide concentrations at this low level is extremely difficult due to the changing water chemistry in the reactor coolant system.

Electrochemical corrosion potential measurements are made in nuclear power stations to determine whether corrosive conditions are occurring in the station and whether stress corrosion cracking is likely to occur. In particular, if the electrochemical corrosion potential value is relatively low (i.e. below a threshold value), stress corrosion crack growth rates are not significant and do not have to be further analyzed. Above the threshold value, however, the possibility of stress corrosion cracking increases when electrochemical corrosion potential values increase. Measurements of electrochemical corrosion potential are made at a single point in the primary coolant system on the component or piping of interest such as in welded neck flanges of water cleanup systems. Existing electrochemical potential probes contain sensors that are typically a metal to metal oxide configuration which respond to oxygen concentrations in the reactor water.

Existing systems used to measure electrochemical corrosion potential have many drawbacks. First, the probes used are fragile and are only operable for approximately three months as the sensors within the probes deteriorate from heat and radiation. As a consequence, the probes can only measure the electrochemical corrosion potential for less than 25% of the resident reactor core time precluding their usage around a nuclear reactor. Nuclear power plant operators alternatives to alleviate this drawback are few. The nuclear power plant may be operated without monitoring corrosive conditions, however if the electrochemical corrosion potential is not measured for the entire fuel cycle, conditions may favor the formation of corrosion or stress corrosion cracking, thereby potentially damaging sensitive and expensive nuclear power plant systems. Alternatively, the nuclear reactor may be shut down and the electrochemical corrosion potential probes around the reactor are replaced. This alternative is economically unattractive due to the economics of a facility closure. The second drawback is that existing systems use a discrete measurement point probe for analysis. This type of system merely provides a spot measurement on an individual system. Existing systems cannot ascertain if the electrochemical corrosion potential is elevated in a part of the nuclear plant system not directly measured. The complex and changing materials through a nuclear power plant coolant system do not allow current systems to accurately measure electrochemical corrosion potential of systems relative to one another. As a consequence, certain systems or subsystems of the nuclear reactor are more prone to corrosion and stress corrosion cracking, as compared to others. Current systems do not allow the nuclear plant operator to compare data derived from measuring different systems, therefore attention is focused on the probe location. A true risk assessment analysis of the entire nuclear plant system is not performed. Current systems also do not determine an electrochemical corrosion potential for zirconium clad fuel elements. To date, current systems are limited to determining electrochemical corrosion potential of structural or piping members inside the reactor cooling systems.

EP 0 417 571 discloses a plant operational status monitoring supervisory system comprising an electrochemical reference electrode.

JP 2000 065 785 discloses an electrochemical sensor comprising a yltria stabilized zirconia electrode.

US 6 623 611 discloses an electrochemical sensor comprising a zircaloy tip electrode.

There is a need to provide an electrochemical corrosion potential measuring system that will allow for a determination of an electrochemical corrosion potential during an entire fuel cycle of a nuclear power plant.

There is a further need to provide an electrochemical corrosion potential measuring system that allows for replacement of a probe and its associated sensors at the end of its service life in a cost efficient manner.

There is also a need to provide an electrochemical corrosion potential measuring system that will determine the electrochemical corrosion potential of a nuclear system from several different points to provide data to a nuclear plant operator as to which nuclear systems are at risk for corrosion relative to other nuclear systems.

There is also a further need to provide an electrochemical corrosion potential measuring system that may be utilized with fuel rods in a nuclear power plant system to determine the amount of potential degradation of fuel rods during reactor operating conditions.

### SUMMARY

It is therefore an objective of the present invention to provide an electrochemical corrosion potential measuring system that will allow for determining an electrochemical corrosion potential during an entire fuel cycle of a nuclear power plant.

It is also an objective of the present invention to provide an electrochemical corrosion potential measuring system that allows for replacement of a probe and its associated sensors at the end of the sensors respective lifetime in a cost efficient manner.

It is also an objective of the invention to provide an electrochemical corrosion potential measuring system that will allow for determination of electrochemical corrosion potential from several different points inside a nuclear power plant to provide data to a nuclear plant operator as to what nuclear systems are at risk for stress corrosion potential relative to other nuclear systems.

It is a still further objective of the present invention to determine the electrochemical corrosion potential of nuclear fuel rods.

The objectives of the present invention are achieved as illustrated and described. The invention provides a nuclear power plant comprising a system for determining an electrochemical corrosion potential for nuclear reactor fuel rods as in claim 1.

The present invention also provides a method for determining an electrochemical corrosion potential of a nuclear reactor fuel rod as in claim 8.

### BRIEF DESCRIPTION OF THE DRAWINGS

Figure 1 is an arrangement for positioning electrochemical potential probes in an exemplary nuclear reactor coolant system of a pressurized water reactor.
Figure 2 is an arrangement for positioning electrochemical potential probes in an exemplary nuclear reactor coolant system of a boiling water reactor.
Figure 3 is a fuel assembly arrangement illustrating zirconium clad fuel rods.
Figure 4 is an arrangement for measuring an electrochemical corrosion potential in conformance with the present invention.

### DETAILED DESCRIPTION

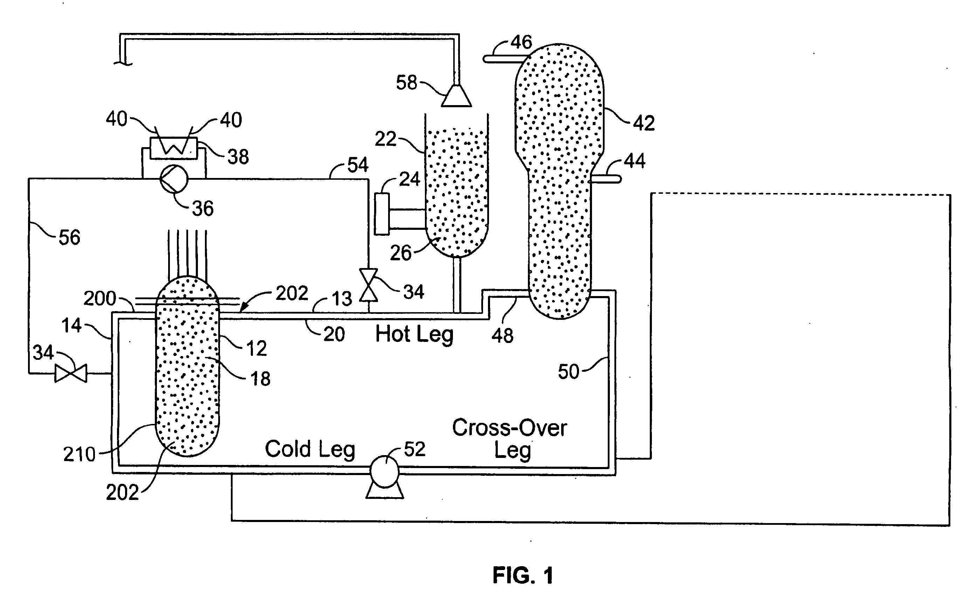

Referring to Figure 1, an electrochemical corrosion potential analyzing system 10 for a pressurized water reactor is illustrated. Although shown in Fig. 1 as relating to pressurized water reactors, the system 10 is equally applicable to boiling water reactors and thus the example embodiment, illustrated should not be considered limiting. A nuclear reactor 12 contains nuclear fuel in the form of fuel assemblies 18. The fuel assemblies 18 are located in the reactor 12 such that under prescribed conditions, the nuclear fuel in the fuel assemblies 18 produces a nuclear chain reaction which consequently produces heat. The heat generated by the reaction is removed from the reactor 12 by water flowing in an attached reactor coolant system 13. The water flows in the reactor coolant system 13 from a reactor water inlet 14 into the nuclear reactor 12 and through the nuclear fuel assemblies 18. A reactor outlet 20 allows the warmed water from the reactor 12 to exit the reactor 12 for further processing. The warmed water proceeds out of the reactor outlet 20 and then passes by a pressurizer 22 which maintains pressure and shock control for the reactor coolant system 13. A vapor phase 58 is maintained in a top part of the pressurizer 22 by the actuation of a heater 26 controlled by a heater control unit 24. Water volume in the pressurizer 22 may be modified by adding rector coolant from a pressurizer surge tank 32. The pressurizer 22 is connected to the reactor coolant system via a pressurizer surge line 30, which may be straight or bent, (e.g. S bend), through which the pressure and shock control is performed.

The water traveling through rector outlet 20 passes to the pressurizer through the reactor coolant system steam generator inlet 48. The warmed water passes through the steam generator 42 and transfers the heat to a separate body of water passing from the steam generator inlet 44 to the steam generator outlet 46. The water passing through the steam generator inlet 44 to the steam generator outlet 46 may be transformed to a vapor phase and subsequently passed through a turbine for electrical generating purposes, for example. The water passing through the steam generator 42 exits through a rector coolant system steam generator outlet 50. The water then returns back through the reactor coolant system 13 to the nuclear reactor 12 by aid of the reactor coolant pump 52. If the control valve 34 allows the warmed water which exits the reactor outlet 20 to the residual heat removal inlet line 54, the warmed water then passes through a residual heat removal pump 36 with a connected heat exchanger 38. The heat of the warmed water may be transferred by a heat exchanger 38 to a separate body of water flowing through an inlet/outlet 40. The water passing through the residual heat removal pump 36 may then be returned to the remainder of the reactor coolant system 13 through a residual heat removal outlet line 56.

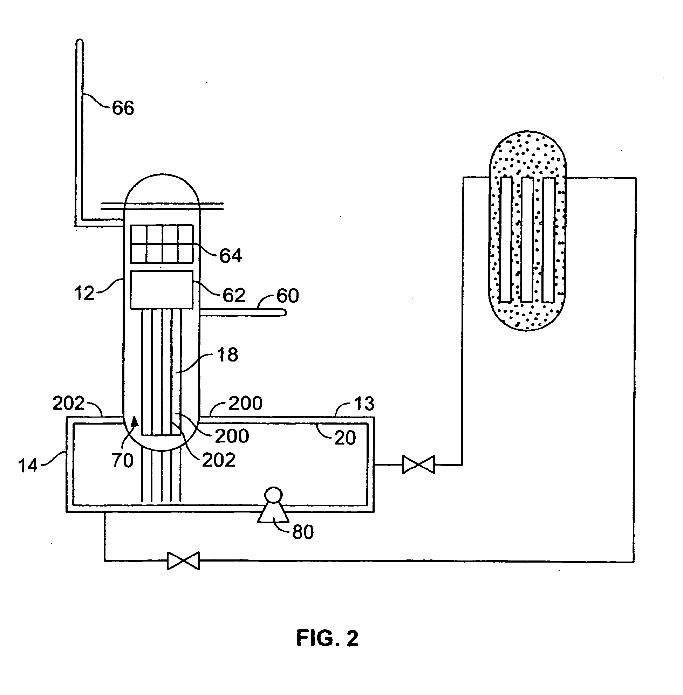

Referring to figure 2, an electrochemical corrosion potential analyzing system for a backward pumped boiling water reactor is illustrated. A nuclear reactor 12 contains nuclear fuel in the form of fuel assemblies 18. The fuel assemblies 18 are located in the reactor 12 such that under prescribed conditions the nuclear fuel in the fuel assemblies 18 produces a nuclear chain reaction by emitting nuclear radiation and heat. The heat, generated by the reaction, is removed from the reactor 12 by boiling water and thus producing steam. The water, which is used for boiling, is transported into the reactor 12 via the feedwater pipe 60. The water may be forced through the fuel assemblies 18 by use of internal jet pumps 70. The water may be transformed into steam when passing through the fuel assemblies 18. The steam then passes through a steam separator 62 and steam dryer 64 to the main steam pipe 66, which leads the steam away from the reactor 12. An average temperature distribution of the water is achieved circulating the water through an external recirculation piping 13. The water is removed from the reactor 12 through a reactor outlet pipe 20. It is then transported through the recirculation pump 80 and is then transported back to the reactor through the reactor inlet pipe 14.

Referring to figures 1 and 2, probes 200,202 of the system 10 may be positioned at multiple locations in the reactor coolant system 13 and reactor 12 and in adjacent systems to measure electrochemical corrosion potential. The probes 200,202 may be positioned in the reactor coolant inlet 14 and the reactor outlet 20 to measure electrochemical corrosion potential in areas close to the reactor 12. The probes 200,202 may also be positioned anywhere in the reactor coolant system 13 for example on zirconium material structures for measuring of the potential. As illustrated, the probes 200,202 may also be installed on the fuel assemblies 18, for example, at a bottom tie plate or nozzle of the assembly.

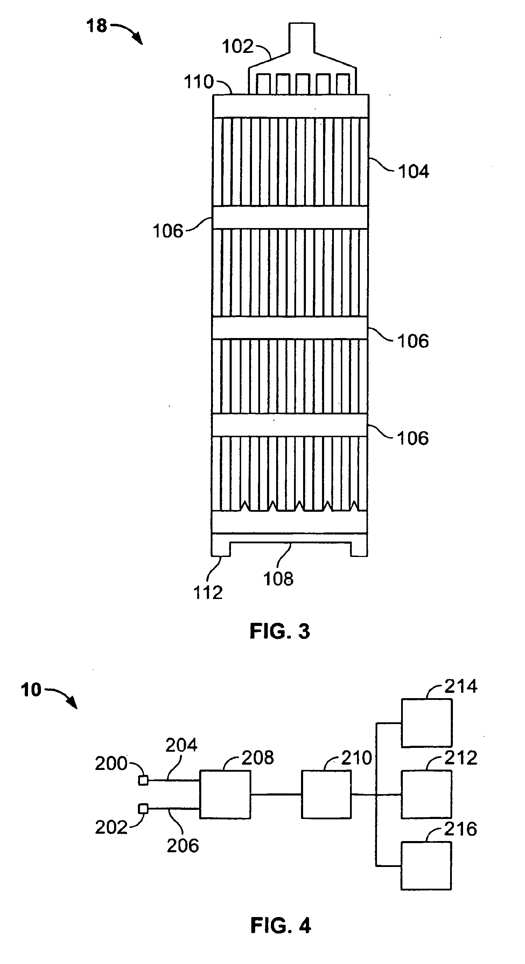

Referring to Figure 3, an expanded view of a nuclear fuel assembly 18 is illustrated. The nuclear fuel assembly 18 has fuel rods 104 which are comprised of cylindrical fuel elements of enriched uranium dioxide fuel. The enriched uranium dioxide fuel is sheathed in zirconium alloy metal in the form of a rod 104. The typical length of a fuel rod 104 may be, for example, 4,5 to 5,5 m (15 to 18 feet) long. The individual fuel rods 104 are maintained in relative position by use of spacers 106 placed at intermediate positions from a fuel assembly top 110 to the fuel assembly bottom 112. Control rods 102 are configured to be inserted in between the fuel rods 104 to slow down the nuclear reaction occurring in the fuel assembly.

During the nuclear reaction process, the zirconium clad uranium dioxide may be susceptible to stress corrosion cracking due to increased levels of dissolved .oxygen for example. To accurately measure the susceptibility of the zirconium clad nuclear fuel rods to electrochemical corrosion and inter granular stress corrosion cracking, the electrochemical corrosion potential system 10 measures the electrochemical corrosion potential of areas inside or outside of the reactor core (and away from the zirconium fuel rods) but nearby enough to the nuclear fuel assemblies to provide a representative value of the electrochemical corrosion potential of the zirconium encased uranium dioxide. Probes which measure the electrochemical corrosion potential of discrete areas of the reactor coolant system 13 may be placed throughout the reactor coolant system 13 such as at the feedwater inlet 14 and reactor outlet 20 as described in the example embodiment above to allow plant operators to both individually determine the susceptibility of the individual components of the reactor components as well as an entire system overview.

By measuring several components inside or outside of the reactor for the electrochemical corrosion potential, the components closely associated in material type and position would have a similar electrochemical corrosion. For this reason, in the example embodiment described, electrochemical corrosion probes may be placed on the feedwater inlet 14, of the nuclear reactor pressure vessel close to the reactor 12 yet far enough away from neutron flux and heat of the reactor 12. These probes can be configured such that each of the probes measure a voltage which maybe proportional to the electrochemical corrosion potential of the individual metallic components measured. The measured values may then be sent by leads or other arrangements to an arrangement 208, such as a poteniostat and/or computer, configured to receive such voltage inputs. The arrangement 208 may then average the values obtained on the entrance and exit of the reactor or any other location in the reactor or adjacent system to obtain an average value of electrochemical corrosion potential. The arrangement 208 may be located at a remote location from the reactor coolant system 13 to allow operators to monitor electrochemical corrosion potential outside of a radioactive environment.

The electrochemical corrosion system 10 may have at least two probes 200, 202 wherein at least one of the probes has at least one zirconium electrode. At least one of the probes 200,202 has a zirconium electrode such that the zirconium electrode closely matches the material constituents of the fuel rods zirconium fuel cladding, thereby indicating a corrosion potential of the zircalloy cladding material of the fuel elements relative to that of other structural members and piping of the reactor internals.

The electrochemical corrosion potential measurements may be made by two differing methods. A sensor may provide data for determination of an electrochemical corrosion potential through the application of an external current to a sensor in the probe, wherein after a voltage is then measured between the sensor and a reference sensor. Alternatively, the electrochemical corrosion potential may be determined from data provided by a sensor which is potentiostatically controlled (voltage controlled) (i.e. a voltage differential is created between at least two sensors). A current is then measured between the two sensors. In the instance of a potentiostatically controlled probe with two sensors, the measured current may then be used to calculate a corrosion rate knowing the material type, the area sampled, and the approximate density of the material sampled for example.

Referring to Figure 4, a system 10 for measuring an electrochemical corrosion potential according to the invention is illustrated. A first probe 200 and a second probe 202 are connected to an arrangement 208. The first probe 200 and the second probe 202 may have internal sensors used for measuring the electrochemical corrosion potential of the surface that the probes 200,202 are instated upon. The arrangement 208 is configured to at least one of establish a voltage differential to the individual first probe 200 and second probe 202 or apply a current to each of the first probe 200 and second probe 202 through respective first 204 and second 206 leads. Each of the first and second leads 204,206 may be placed such that the leads 204,206 are not subject to excessive heat conditions. Additionally, each of the probes 200, 202 connected to the arrangement 204 may be configured with a differing material zirconium alloy, such that a electrochemical corrosion potential for differing material types is determined. The leads 204 and 206 may also be positioned such that potential electrical interference from flowing current and/on voltage is minimized. The leads 204 and 206 extend between the arrangement 208 and the first probe 200 and second probe 202. The leads 204 may both send and receive current and/or voltages to and from the probes 200,202 and the arrangement 208. In an alternative configuration, the probes 200,202 may be configured such that transmission of data determined by the probes is performed through wireless technology. The arrangement 208 may be a potentiostat, as a nonlimiting example.

The arrangement 208 may also be connected to a computer 210 which may retain data from the probes 200,202. The computer 210 may obtain data from the probes 200,202 on a periodic basis or on a continual basis as the discretion of the operator. The computer 210 may retain the data from the probes 200,202 in a memory or may output the data to an attached printer 212. The arrangement 208 and the computer 210 may be configured such that more than two probes are connected for data acquisition. The computer 210 may also calculate the amount of corrosive damage to the fuel rods 104 over time, given the calculation of the electrochemical corrosion potential and derived corrosion rate. By performing this calculation of anticipated damage amounts over time, reactor operators are provided with an assessment of acceptable safety margins for the nuclear fuel assembly 18 over time. This consequently allows the reactor operators sufficient time to plan reactor outages as well as predict what work will need to be accomplished during the reactor outage.

The probes 200,202 and associated leads 204,206 may also be installed inside the nuclear reactor such that measurements may be accomplished close to the nuclear reactor fuel assemblies 18. If the probes 200,202 and associated leads 204,206 are installed internally in the reactor pressure vessel 12, the probes 200,202 and leads 204,206 may be designed such that they can withstand the anticipated neutron flux and heat conditions of the reactor 12. The leads 204,206 may be placed through an existing instrumentation penetration in nuclear pressure vessel 12, thereby allowing the system 10 to be installed in existing nuclear power stations without modification. The probes 200,202 may be installed on structural members inside the reactor pressure vessel 12 which contain zirconium alloys, thereby allowing measurements to be obtained. Alternatively, the probes 200,202 may be attached to identifiable sections of fuel assemblies 18, for example the ends of the fuel assemblies such as the external positions of the nozzle 108. The attachment of the probes 200,202 to the reactor 12 is accomplished such that foreign material from the probes 200,202 is excluded from the reactor water coolant stream under normal and accident conditions. In another example embodiment, a probe or individual sensors, for example two sensors, may be positioned internally in the reactor 12, while two sensors remain outside the reactor 12 to provide a reference reading. The measurements obtained by the sensors in the reactor 12 and outside the reactor 12 are then provided to an arrangement such as a potentiostat. The probes 200,202 may be extend from a penetration in bottom of the reactor pressure vessel 12, for example an Instrumentation Thimble penetration, and may be positioned on any lower structure of the reactor 12, for example, the lower core plate, the flow mixer plate or bottom support forging. The computer 210 may then take the data provided to the arrangement 208 and calculate the electrochemical corrosion potential. The probes 200,202 may be configured such that they can be removed during in-vessel work during a reactor outage such that maintenance of the probes 200,202 does not severely economically impact the operation of the reactor.

The present invention provides an electrochemical corrosion potential system that allows for determination of an electrochemical corrosion potential for nuclear fuel rods during an entire fuel cycle of a nuclear power plant. The proximity of the placement of the probes to the fuel assemblies allows for the calculation of electrochemical corrosion potential for the zirconium cladding of the fuel assemblies unachievable by other systems. Replacement and maintenance costs of the present invention allow the operators of the facility to accurately monitor the corrosion potential, while providing minimal economic impact on the facility.

In the foregoing specification, the invention has been described with reference to specific exemplary embodiments thereof. It will, however, be evident that various modifications and changes may be made thereunto without departing from the invention as set forth in the appended claims. The specification and drawings are accordingly to be regarded in an illustrative rather than in a restrictive sense.

## Claims

1. A nuclear power plant comprising a nuclear reactor (12), a reactor coolant system (13) and a system (10) for determining an electrochemical corrosion potential for nuclear reactor fuel rods in the nuclear reactor, the system (10) for determining an electrochemical corrosion potential for nuclear reactor fuel rods comprising:
a first proble (200) and a second probe (202) positioned in the nuclear reactor (12) and/or in the reactor coolant system (13), the probes (200,202) having internal sensors for measuring the electrochemical potential of the surface the probes (200,202) are installed upon wherein at least one of the probes has a zirconium electrode; and
an arrangement (208) configured to accept the voltages produced by the probes wherein the arrangements (208) is configured to determine an electrochemical corrosion potential of a zirconium fuel rod in the nuclear reactor (12) based upon the voltages of the probes (200,202).

2. Nuclear power plant according to claim 1, wherein the arrangement (208) configured to accept the voltages produced by the probes (200,202) is a potentiostat.

3. Nuclear power plant according to claim 2, wherein the system (10) for determining an electrochemical corrosion potential for nuclear reactor fuel rods further comprises:
a computer (210) connected to the potentiostat.

4. Nuclear power plant according to claim 3, wherein the system (10) for determining an electrochemical corrosion potential for nuclear reactor fuel rods further comprises:
a display device connected to the computer (210),
a data storage device connected to the computer (210); and
a printer (212) connected to the computer (210).

5. Nuclear power plant according to claim 3, wherein the computer (210) is adapted to average the voltage values obtained from the probes (200,202) to determine the electrochemical corrosion potential of the fuel rods.

6. Nuclear power plant according to claim 1, wherein each probe (200,202) has a zirconium electrode.

7. Nuclear power plant according to claim 6, wherein each probe (200,202) has a different zirconium alloy electrode.

8. A method for determining an electrochemical corrosion potential of a nuclear reactor fuel rod, comprising:
positioning a first probe (200) and a second probe (202) in a nuclear reactor (12) and/or in a reactor coolant system (13), the probes (200,202) having internal sensors for measuring the electrochemical potential of the surface the probes (200,202) are installed upon wherein at least one of the probes (200,202) has a zirconium electrode;
producing a voltage between the probes (200,202);
measuring a current induced by the voltage; and
calculating an electrochemical corrosion potential of a zirconium fuel rod in the nuclear reactor (12) based upon the current induced.

9. The method for determining an electrochemical corrosion potential of a nuclear reactor fuel rod according to claim 8, wherein the positioning of the probes (200,202) are on one of a bottom and a top of a nuclear fuel assembly (18).

10. The method for determining an electrochemical corrosion potential of a nuclear reactor fuel rod according to claim 8, wherein the positioning of the probes (200,202) are in the reactor coolant system (13) adjacent to the reactor (12).

11. The method for determining an electrochemical corrosion potential of a nuclear reactor fuel rod according to claim 8, wherein the positioning of one probe (200,202) is on one of a bottom and a top of the nuclear fuel assembly (18) and wherein the positioning of one probe (200,202) is in the reactor coolant system (13) adjacent to the reactor (12).

## Patentansprüche

1. Kernkraftanlage, die einen Kernreaktor (12), ein Kühlmittelsystem (13) für den Reaktor und ein System (10) zum Bestimmen des elektrochemischen Korrosionspotentials für die Brennstäbe des Kernreaktors im Kernreaktor aufweist, wobei das System (10) zum Bestimmen des elektrochemischen Korrosionspotentials für die Brennstäbe des Kernreaktors folgendes aufweist:
- eine erste Sonde (200) und eine zweite Sonde (202), die sich im Kernreaktor (12) und/oder im Kühlmittelsystem (13) des Reaktors befinden, wobei die Sonden (200, 202) innere Sensoren zum Messen des elektrochemischen Potentials der Oberfläche aufweisen, auf der die Sonden (200, 202) installiert sind, wobei zumindest eine der Sonden eine Zirconiumelektrode aufweist; und
- eine Anordnung (208), die so ausgebildet ist, dass sie die von den Sonden erzeugten Spannungen empfängt, wobei die Anordnung (208) so ausgebildet ist, dass sie das elektrochemische Korrosionspotential eines Zirconiumbrennstabs im Kernreaktor (12) auf der Basis der Spannungen der Sonden (200, 202) bestimmt.

2. Kernkraftanlage nach Anspruch 1,
wobei die Anordnung (208), die so ausgebildet ist, dass sie die von den Sonden (200, 202) erzeugten Spannungen empfängt, ein Potentiostat ist.

3. Kernkraftanlage nach Anspruch 2,
wobei das System (10) zum Bestimmen des elektrochemischen Korrosionspotentials für Brennstäbe eines Kernreaktors ferner folgendes aufweist:
einen mit dem Potentiostat verbundenen Computer (210).

4. Kernkraftanlage nach Anspruch 3,
wobei das System (10) zum Bestimmen des elektrochemischen Korrosionspotentials für Brennstäbe eines Kernreaktors ferner folgendes aufweist:
eine Anzeigeeinrichtung, die mit dem Computer (210) verbunden ist;
eine Datenspeichereinrichtung, die mit dem Computer (210) verbunden ist; und
einen Drucker (212), der mit dem Computer (210) verbunden ist.

5. Kernkraftanlage nach Anspruch 3,
wobei der Computer (210) dazu ausgelegt ist, Durchschnittswerte der Spannungswerte zu berechnen, die von den Sonden (200, 202) erhalten werden, um das elektrochemischen Korrosionspotential der Brennstäbe zu bestimmen.

6. Kernkraftanlage nach Anspruch 1,
wobei jede Sonde (200, 202) eine Zirconiumelektrode aufweist.

7. Kernkraftanlage nach Anspruch 6,
wobei jede Sonde (200, 202) eine Elektrode aus einer anderen Zirconiumlegierung aufweist.

8. Verfahren zum Bestimmen des elektrochemischen Korrosionspotentials eines Brennstabs eine Kernreaktors, das folgendes aufweist:
- Anordnen einer ersten Sonde (200) und einer zweiten Sonde (202) in einem Kernreaktor (12) und/oder in einem Kühlmittelsystem (13) des Reaktors, wobei die Sonden (200, 202) innere Sensoren zum Messen des elektrochemischen Potentials der Oberfläche aufweisen, auf der die Sonden (200, 202) installiert sind, wobei zumindest eine der Sonden (200, 202) eine Zirconiumelektrode aufweist;
- Erzeugen einer Spannung zwischen den Sonden (200, 202);
- Messen des durch die Spannung erzeugten Stroms; und
- Berechnen des elektrochemischen Korrosionspotentials eines Zirconiumbrennstabs im Kernreaktor (12) auf der Basis des erzeugten Stroms.

9. Verfahren zum Bestimmen des elektrochemischen Korrosionspotentials eines Brennstabs eines Kernreaktors nach Anspruch 8,
wobei das Anordnen der Sonden (200, 202) am Boden oder an der Oberseite einer Kernbrennstoffanordnung (18) erfolgt.

10. Verfahren zum Bestimmen des elektrochemischen Korrosionspotentials eines Brennstabs eines Kernreaktors nach Anspruch 8,
wobei das Anordnen der Sonden (200, 202) im Kühlmittelsystem (13) des Reaktors an den Reaktor (12) angrenzend erfolgt.

11. Verfahren zum Bestimmen des elektrochemischen Korrosionspotentials eines Brennstabs eines Kernreaktors nach Anspruch 8,
wobei das Anordnen einer Sonde (200, 202) am Boden oder an der Oberseite der Kernbrennstoffanordnung (18) erfolgt und wobei das Anordnen einer Sonde (200, 202) im Kühlmittelsystem (13) des Reaktors an den Reaktor (12) angrenzend erfolgt.

## Revendications

1. Centrale nucléaire comprenant un réacteur nucléaire (12), un système de réfrigérant de réacteur (13) et un système (10) pour la détermination d'un potentiel de corrosion électrochimique pour des barres de combustible de réacteur nucléaire dans le réacteur nucléaire, le système (10) pour la détermination d'un potentiel de corrosion électrochimique pour des barres de combustible de réacteur nucléaire comprenant :
une première sonde (200) et une seconde sonde (202) positionnées dans le réacteur nucléaire (12) et/ou dans le système de réfrigérant de réacteur (13), les sondes (200, 202) comportant des capteurs internes pour la mesure du potentiel électrochimique de la surface sur laquelle sont installées les sondes (200, 202), dans laquelle au moins une des sondes comporte une électrode au zirconium ; et
un agencement (208) configuré pour accepter les tensions produites par les sondes, dans laquelle l'agencement (208) est configuré pour déterminer un potentiel de corrosion électrochimique d'une barre de combustible au zirconium dans le réacteur nucléaire (12) d'après les tensions des sondes (200, 202).

2. Centrale nucléaire selon la revendication 1, dans laquelle l'agencement (208) configuré pour accepter les tensions produites par les sondes (200, 202) est un potentiostat.

3. Centrale nucléaire selon la revendication 2, dans laquelle le système (10) pour la détermination d'un potentiel de corrosion électrochimique pour des barres de combustible de réacteur nucléaire comprend en outre :
un ordinateur (210) connecté au potentiostat.

4. Centrale nucléaire selon la revendication 3, dans laquelle le système (10) pour la détermination d'un potentiel de corrosion électrochimique pour des barres de combustible de réacteur nucléaire comprend en outre :
un dispositif d'affichage connecté à l'ordinateur (210),
un dispositif de stockage de données connecté à l'ordinateur (210) ; et
une imprimante (212) connectée à l'ordinateur (210).

5. Centrale nucléaire selon la revendication 3, dans laquelle l'ordinateur (210) est adapté pour moyenner les valeurs de tension obtenues par les sondes (200, 202) afin de déterminer le potentiel de corrosion électrochimique des barres de combustible.

6. Centrale nucléaire selon la revendication 1, dans laquelle chaque sonde (200, 202) comporte une électrode au zirconium.

7. Centrale nucléaire selon la revendication 6, dans laquelle chaque sonde (200, 202) comporte une électrode en alliage de zirconium différente.

8. Procédé pour la détermination d'un potentiel de corrosion électrochimique d'une barre de combustible de réacteur nucléaire, comprenant :
le positionnement d'une première sonde (200) et d'une seconde sonde (202) dans un réacteur nucléaire (12) et/ou dans un système de réfrigérant de réacteur (13), les sondes (200, 202) comportant des capteurs internes pour la mesure du potentiel électrochimique de la surface sur laquelle sont installées les sondes (200, 202), dans lequel au moins une des sondes (200, 202) comporte une électrode au zirconium ;
la production d'une tension entre les sondes (200, 202) ;
la mesure d'un courant induit par la tension ; et
le calcul d'un potentiel de corrosion électrochimique d'une barre de combustible au zirconium dans le réacteur nucléaire (12) d'après le courant induit.

9. Procédé pour la détermination d'un potentiel de corrosion électrochimique d'une barre de combustible de réacteur nucléaire selon la revendication 8, dans lequel le positionnement des sondes (200, 202) se fait sur l'une d'une partie inférieure et d'une partie supérieure d'un assemblage combustible nucléaire (18).

10. Procédé pour la détermination d'un potentiel de corrosion électrochimique d'une barre de combustible de réacteur nucléaire selon la revendication 8, dans lequel le positionnement des sondes (200, 202) se fait dans le système de réfrigérant de réacteur (13) adjacent au réacteur (12).

11. Procédé pour la détermination d'un potentiel de corrosion électrochimique d'une barre de combustible de réacteur nucléaire selon la revendication 8, dans lequel le positionnement d'une sonde (200, 202) se fait sur l'une d'une partie inférieure et d'une partie supérieure de l'assemblage combustible nucléaire (18) et dans lequel le positionnement d'une sonde (200, 202) se fait dans le système de réfrigérant de réacteur (13) adjacent au réacteur (12).
